# EUROPEAN PATENT APPLICATION

(11) **EP 4 568 345 A1**
(43) Date of publication of application: **11.06.2025**
(21) Application number: 23858896.6
(22) Date of filing: 29.06.2023
(51) Int. Cl.: H04W 36/00

(54) **COMMUNICATION METHOD AND APPARATUS**

(30) Priority: 29.08.2022 CN 202211040725
(71) Applicant: Huawei Technologies Co., Ltd., Shenzhen, Guangdong 518129 (CN)
(72) Inventor: YOU, Chunhua, Shenzhen, Guangdong 518129 (CN); FAN, Qiang, Shenzhen, Guangdong 518129 (CN); LOU, Chong, Shenzhen, Guangdong 518129 (CN)
(74) Representative: Pfenning, Meinig & Partner mbB
(86) International application number: PCT/CN2023/104097
(87) International publication number: WO 2024/045858

(57) **Abstract**

This application relates to the field of communication technologies, and discloses a communication method and apparatus. The method includes: A terminal device receives configuration information of M cells from a first network device, where all the M cells are cells managed by the first network device; and the terminal device receives first indication information from the first network device, where the first indication information indicates the terminal device to select a first target cell. If the terminal device selects the first target cell from the M cells based on the configuration information of the M cells, the terminal device performs cell handover to the first target cell. In this way, the first indication information sent by the first network device may not need to carry an identifier of the first target cell, but the terminal device selects the first target cell (for example, the terminal device may select the first target cell based on current layer-1/layer-2 measurement results of the M cells). This facilitates selection of a proper first target cell, thereby improving a success rate of the cell handover.

## Description

### CROSS-REFERENCE TO RELATED APPLICATIONS

This application claims priority to Chinese Patent Application No. 202211040725.4, filed with the China National Intellectual Property Administration on August 29, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A terminal device is mobile. To be specific, the terminal device may move from a coverage area of one cell to a coverage area of another cell. Therefore, cell handover needs to be performed in a movement process of the terminal device, so that the terminal device is handed over from one cell to another cell, to avoid significant interruption of a service connection (for example, a voice call connection or a network data connection) of the terminal device.

In a cell handover process, the terminal device may measure a serving cell and a plurality of candidate cells based on measurement configuration information from a network device, to obtain cell quality of the serving cell and the plurality of candidate cells. Then, the terminal device reports the cell quality of the serving cell and the plurality of candidate cells to the network device. Correspondingly, after receiving the cell quality of the serving cell and the plurality of candidate cells, the network device may select one target cell from the plurality of candidate cells based on cell quality of the plurality of candidate cells, and indicate the terminal device to be handed over from the serving cell to the target cell.

However, in the foregoing method, the network device needs to select the target cell and indicate the terminal device to perform handover. Cell quality dynamically changes, and the quality of the plurality of candidate cells based on which the network device selects the target cell is obtained by the terminal device through measurement before reporting. Therefore, the target cell selected by the network device may not be a cell that is currently suitable for the terminal device

### SUMMARY

This application provides a communication method and apparatus for a terminal device to select a target cell for cell handover, to improve a success rate of the cell handover.

According to a first aspect, an embodiment of this application provides a communication method. The method may be applied to a terminal device or a module (for example, a chip) in a terminal device. For example, the method is applied to a terminal device. In the method, the terminal device receives a first message from a first network device, where the first message includes configuration information of M cells, and all the M cells are cells managed by the first network device; receives first indication information from the first network device, where the first indication information indicates the terminal device to select a first target cell; and if the first target cell is selected from the M cells based on the configuration information of the M cells, performs cell handover to the first target cell, where M is an integer greater than or equal to 2.

In this way, the first indication information sent by the first network device may not need to carry an identifier of the first target cell, but the terminal device selects the first target cell (for example, the terminal device may select the first target cell based on current layer-1/layer-2 measurement results of the M cells). Compared with a solution in which the first network device selects the first target cell (for example, the first network device selects the first target cell based on a layer-3 measurement result that is of the M cells and that is previously obtained and reported by the terminal device), this facilitates selection of a proper first target cell, thereby improving a success rate of the cell handover.

In a possible design, the first indication information is carried in a layer-1 message or a layer-2 message.

In this way, the first network device sends the first indication information to the terminal device via the layer-1/layer-2 message. Compared with a case in which the first network device sends a handover command to the terminal device by via RRC message, this can effectively reduce a handover delay.

In a possible design, the method further includes: if the cell handover to the first target cell fails, sending an RRC re-establishment request message to a second network device in a second cell, where the RRC re-establishment request message includes an identifier of a first cell and an identifier of the terminal device in the first cell. The first cell is a cell receiving the first message. Alternatively, if a cell receiving the first message is a secondary cell, the first cell is a primary cell corresponding to the secondary cell. Alternatively, the first cell is a source cell for the cell handover.

In this way, an identifier of a cell and an identifier of a cell in which the terminal device is located are specified in the RRC re-establishment request message. This facilitates implementation of an RRC re-establishment procedure of the terminal device.

In a possible design, that the cell handover to the first target cell fails includes: When a first timer expires, the cell handover to the first target cell fails, where the first timer is started or restarted when the first message is received or when the first indication information is received.

For example, after receiving the first indication information, if the terminal device selects the first target cell but the handover fails, the terminal device may reselect a first target cell and perform cell handover. In this way, the first timer is set, and after the first timer expires, the terminal device may determine that the cell handover fails. This avoids high power consumption caused by the terminal device repeating the foregoing operations (selecting the first target cell and performing the cell handover) for a long time.

In a possible design, if the first timer is started or restarted when the first message is received, before receiving first indication information from the first network device, the method further includes: receiving second indication information from the first network device, where the second indication information indicates the terminal device to select a second target cell; and if the second target cell is selected from the M cells based on the configuration information of the M cells, performing cell handover to the second target cell, where the handover succeeds.

In other words, during running of the first timer, before receiving the first indication information, the terminal device may successfully perform one or more times of handover. Therefore, for example, if the source cell for the cell handover to the first target cell is a cell a, the cell a may be different from a cell b or a cell c. The cell b is a cell receiving the first message, or if the cell receiving the first message is a secondary cell, the cell c is a primary cell corresponding to the secondary cell.

In a possible design, that the cell handover to the first target cell fails includes: When a second timer expires, if the first target cell fails to be selected from the M cells based on the configuration information of the M cells, the cell handover to the first target cell fails, where the second timer is started or restarted when the first indication information is received.

In this way, the second timer is set, and after the second timer expires, the terminal device may determine that the cell handover to the first target cell fails. This avoids high power consumption caused by the terminal device repeating the operation of selecting the first target cell for a long time.

In a possible design, that the cell handover to the first target cell fails includes: When a quantity of consecutive handover failures is greater than or equal to a quantity threshold, the cell handover to the first target cell fails.

In this way, the quantity threshold is set, and when the quantity of consecutive handover failures is greater than or equal to the quantity threshold, the terminal device may determine that the cell handover to the first target cell fails. This avoids high power consumption caused by the terminal device repeating the foregoing operations (selecting the first target cell and performing the cell handover) for a long time.

In a possible design, the method further includes: receiving at least one of the following from the first network device: duration of the first timer, duration of the second timer, and the quantity threshold.

In this way, the first network device configures the foregoing parameters for the terminal device, so that the first network device can flexibly control the terminal device.

In a possible design, the RRC re-establishment request message further includes a cause value of a cell handover failure. The cause value indicates that a target cell for the cell handover fails to be selected, or the cause value indicates that a target cell for the cell handover cannot be accessed after the target cell is selected.

In this way, the RRC re-establishment request message carries the cause value of the cell handover failure, so that the second network device can learn of the cause. Optionally, the second network device may collect statistics on causes of cell handover failures.

In a possible design, the M cells include a first candidate cell, configuration information of the first candidate cell includes first information, and the first information is used to determine whether to select the first candidate cell as the first target cell.

In this way, the first network device configures the first information for the terminal device, so that the first network device can flexibly control selection of the first target cell by the terminal device.

In a possible design, the first information includes at least one of the following: a first radio link quality threshold, a first beam quality threshold, and priority information of the first candidate cell.

In a possible design, the method further includes: sending third indication information to the first network device, where the third indication information indicates that radio link quality of a third cell is less than or equal to a second radio link quality threshold, and/or quality of at least one beam of the third cell is less than or equal to a second beam quality threshold, and the third cell is a source cell for the cell handover. The radio link quality of the third cell is obtained based on the quality of the at least one beam.

In this way, the terminal device may send the third indication information to the first network device, to request the first network device to allow the first terminal device to perform the cell handover. In other words, the terminal device may trigger the cell handover.

In a possible design, the third cell belongs to the M cells, and the configuration information of the third cell includes measurement configuration information of the at least one beam. The method further includes: obtaining the quality of the at least one beam through measurement based on the measurement configuration information of the at least one beam.

In this way, the network device configures the measurement configuration information of the at least one beam for the terminal device, so that the terminal device can measure the quality of the at least one beam.

According to a second aspect, an embodiment of this application provides a communication method. The method may be applied to a first network device or a module (for example, a chip) in a first network device, and the method may be further applied to a logical module or software that can implement all or some functions of the first network device. For example, the method is applied to the first network device. In the method, the first network device sends a first message to a terminal device, where the first message includes configuration information of M cells, and all the M cells are cells managed by the first network device; sends first indication information to the terminal device, where the first indication information indicates to select a first target cell; and performs cell handover to the first target cell, where the configuration information of the M cells is used to select the first target cell from the M cells.

In a possible design, the M cells include a first candidate cell, configuration information of the first candidate cell includes first information, and the first information is used to determine whether to select the first candidate cell as the first target cell.

In a possible design, the first information includes at least one of the following: a first radio link quality threshold, a first beam quality threshold, and priority information of the first candidate cell.

In a possible design, the method further includes: receiving third indication information from the terminal device, where the third indication information indicates that radio link quality of a third cell is less than or equal to a second radio link quality threshold, and/or quality of at least one beam of the third cell is less than or equal to a second beam quality threshold, and the third cell is a source cell for the cell handover. The radio link quality of the third cell is obtained based on the quality of the at least one beam.

In a possible design, the third cell belongs to the M cells, and the configuration information of the third cell includes measurement configuration information of the at least one beam.

According to a third aspect, an embodiment of this application provides a communication method. The method may be applied to a second network device or a module (for example, a chip) in a second network device, or the method may be applied to a logical module or software that can implement all or some functions of the second network device. For example, the method is applied to the second network device. In the method, the second network device receives an RRC re-establishment request message from a terminal device, where the RRC re-establishment request message includes an identifier of a first cell and an identifier of the terminal device in the first cell; obtains context information of the terminal device based on the identifier of the first cell and the identifier of the terminal device in the first cell; and sends an RRC re-establishment response message to the terminal device, where the RRC re-establishment response message indicates that RRC re-establishment is completed. The first cell is a cell receiving a first message. Alternatively, if a cell receiving a first message is a secondary cell, the first cell is a primary cell corresponding to the secondary cell. Alternatively, the first cell is a source cell for cell handover.

In a possible design, the RRC re-establishment request message further includes a cause value of a cell handover failure. The cause value indicates that a target cell for the cell handover fails to be selected, or the cause value indicates that a target cell for the cell handover cannot be accessed after the target cell is selected.

It may be understood that the methods claimed in the second aspect and the third aspect correspond to the method claimed in the first aspect. Therefore, for beneficial effects of related technical features of the second aspect and the third aspect, refer to those in the descriptions of the first aspect. Details are not described again.

According to a fourth aspect, this application provides a communication apparatus. The communication apparatus has a function of implementing the first aspect to the third aspect. For example, the communication apparatus includes a corresponding module, unit, or means for performing an operation in the first aspect to the third aspect. The function, the unit, or the means may be implemented by software, may be implemented by hardware, or may be implemented by hardware by executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to the operations in the first aspect to the third aspect.

In a possible design, the communication apparatus includes a processor. The processor may be configured to be coupled to a memory. The memory may store a necessary computer program or necessary instructions for implementing the functions in the first aspect to the third aspect. The processor may execute the computer program or the instructions stored in the memory. When the computer program or the instructions are executed, the communication apparatus implements the method according to any one of the possible designs or implementations of the first aspect to the third aspect.

In a possible design, the communication apparatus includes a processor and a memory. The memory may store a necessary computer program or necessary instructions for implementing the functions in the first aspect to the third aspect. The processor may execute the computer program or the instructions stored in the memory. When the computer program or the instructions are executed, the communication apparatus implements the method according to any one of the possible designs or implementations of the first aspect to the third aspect.

In a possible design, the communication apparatus includes a processor and an interface circuit. The processor is configured to: communicate with another apparatus through the interface circuit, and perform the method according to any one of the possible designs or implementations of the first aspect to the third aspect.

It may be understood that in the fourth aspect, the processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors and one or more memories. The memory may be integrated with the processor, or the memory and the processor are separately disposed. In a specific implementation process, the memory and the processor may be integrated into one chip, or may be disposed on different chips. A type of the memory and a manner of disposing the memory and the processor are not limited in embodiments of this application.

According to a fifth aspect, this application provides a communication system. The communication system may include a terminal device and a first network device. The terminal device is configured to perform the method according to any one of the possible designs of the first aspect, and the first network device is configured to perform the method according to any one of the possible designs of the second aspect. In a possible design, the communication system further includes a second network device, and the second network device is configured to perform the method according to any one of the possible designs of the third aspect.

According to a sixth aspect, this application provides a computer-readable storage medium. The computer storage medium stores computer-readable instructions, and when a computer reads and executes the computer-readable instructions, the computer is enabled to perform the method according to any one of the possible designs of the first aspect to the third aspect.

According to a seventh aspect, this application provides a computer program product. When a computer reads and executes the computer program product, the computer is enabled to perform the method according to any one of the possible designs of the first aspect to the third aspect.

According to an eighth aspect, this application provides a chip. The chip includes a processor. The processor is coupled to a memory, and is configured to read and execute a software program stored in the memory, to implement the method according to any one of the possible designs of the first aspect to the third aspect.

### BRIEF DESCRIPTION OF DRAWINGS

FIG. 1 is a diagram of a communication system applicable to an embodiment of this application;
FIG. 2A is a diagram of a CU-DU separation architecture according to an embodiment of this application;
FIG. 2B is a diagram of another CU-DU separation architecture according to an embodiment of this application;
FIG. 3 is a schematic flowchart of performing cell handover by a terminal device according to an embodiment of this application;
FIG. 4 is a schematic flowchart corresponding to a communication method according to Embodiment 1 of this application;
FIG. 5 is a diagram of starting and timeout of a first timer according to an embodiment of this application;
FIG. 6 is a schematic flowchart corresponding to a communication method according to Embodiment 2 of this application;
FIG. 7 is a possible example block diagram of an apparatus according to an embodiment of this application;
FIG. 8 is a diagram of a structure of a terminal device according to an embodiment of this application; and
FIG. 9 is a diagram of a structure of a network device according to an embodiment of this application.

### DESCRIPTION OF EMBODIMENTS

The following describes the technical solutions in embodiments of this application with reference to the accompanying drawings in embodiments of this application.

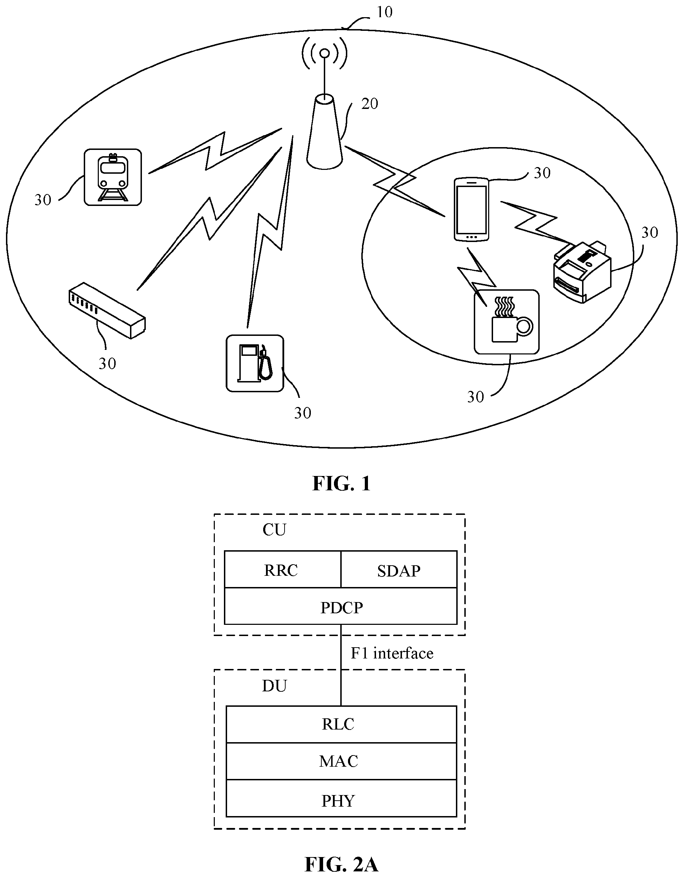

FIG. 1 is a diagram of a communication system applicable to an embodiment of this application. As shown in FIG. 1, a communication system 10 includes one or more network devices 20 and one or more terminal devices 30. An interface between a network device and a terminal device may be a Uu interface (or referred to as an air interface), and data transmission may be performed between the network device 20 and the terminal device 30 via an air interface resource. For example, the terminal device may be located in a communication coverage area of one or more cells of the network device, and there may be one or more cells that serve the terminal device. When there are a plurality of cells that serve the terminal device, the terminal device may work by using one or more of transmission technologies such as carrier aggregation (carrier aggregation, CA), dual connectivity (dual connectivity, DC), coordinated multipoint (coordinated multipoint, CoMP) transmission, and multiple transmission reception points (multiple transmission and reception points, mTRPs).

### (1) Terminal device

The terminal device is also referred to as user equipment (user equipment, UE), a mobile station (mobile station, MS), a mobile terminal (mobile terminal, MT), or the like, and is a device that provides voice and/or data connectivity for a user, for example, a handheld device or a vehiclemounted device having a wireless connection function. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), and a wireless terminal in a smart home (smart home).

### (2) Network device

The network device may include an access network device. The access network device is a radio access network (radio access network, RAN) node (or device) that connects a terminal to a wireless network, and may also be referred to as a base station. Currently, some examples of the network device are a NodeB (NodeB, NB), a next-generation NodeB (gNB), a transmission reception point (transmission reception point, TRP), an evolved NodeB (evolved NodeB, eNB), a radio network controller (radio network controller, RNC), a base station controller (base station controller, BSC), a base transceiver station (base transceiver station, BTS), a home base station (for example, a home evolved NodeB or a home NodeB, HNB), a baseband unit (baseband unit, BBU), and a wireless fidelity (wireless fidelity, Wi-Fi) access point (access point, AP).

### (3) Communication between a terminal device and a network device

Communication between the terminal device and the access network device is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer. A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may also be collectively referred to as an access layer. For specific descriptions of the foregoing protocol layers, refer to related technical specifications of the 3rd generation partnership project (3rd generation partnership project, 3GPP).

### (4) CU-DU separation architecture

For example, in some possible network structures, the network device may include one or more central units (central units, CUs) and one or more distributed units (distributed units, DUs). A plurality of DUs may be centrally controlled by one CU. Such an architecture may be referred to as a CU-DU separation architecture. For example, an interface between the CU and the DU may be referred to as an F1 interface. A control plane (control plane, CP) interface may be an F1-C interface, and a user plane (user plane, UP) interface may be an F1-U interface.

Processing functions of the CU and the DU may be divided based on protocol layers of a wireless network. For example, as shown in FIG. 2A, functions of the PDCP layer and protocol layers above the PDCP layer are set on the CU, and functions of protocol layers (for example, the RLC layer and the MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has a part of processing functions of the protocol layers. This is not limited in embodiments of this application.

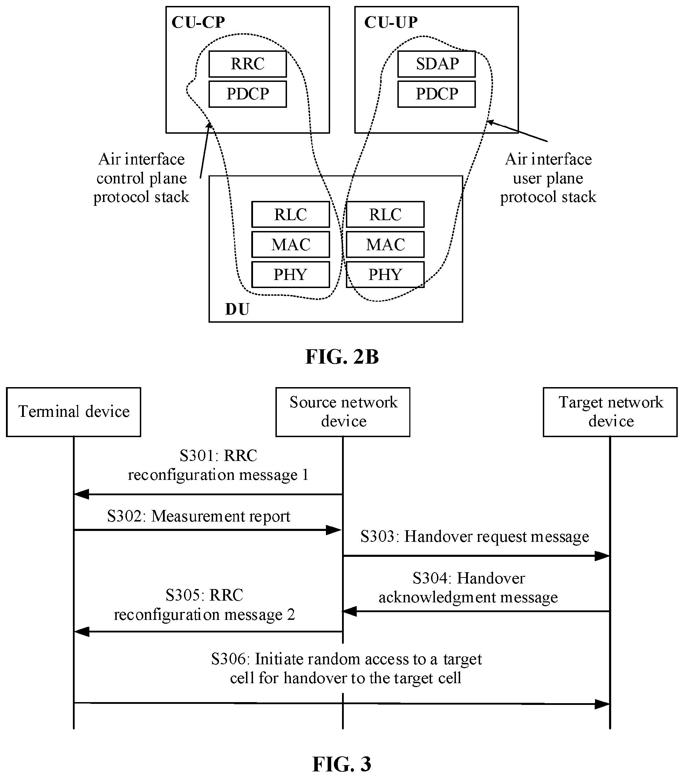

Further, a function of the CU may be implemented by a same entity, or may be implemented by different entities. For example, functions of the CU may be further divided. In other words, the control plane and the user plane are separated and implemented by different entities: a control plane CU entity (namely, a CU-CP entity) and a user plane CU entity (namely, a CU-UP entity). The CU-CP entity and the CU-UP entity may be coupled to the DU, to jointly complete functions of the RAN device. An interface between the CU-CP entity and the CU-UP entity may be an E1 interface, an interface between the CU-CP entity and the DU may be an F1-C interface, and an interface between the CU-UP entity and the DU may be an F1-U interface. One DU and one CU-UP may be connected to one CU-CP. Under control of a same CU-CP, one DU may be connected to a plurality of CU-UPs, and one CU-UP may be connected to a plurality of DUs. Under coordination of a plurality of CU-CPs, one CU-UP may alternatively be connected to a plurality of coordinated CU-CPs. This improves flexibility of the CU-CP. FIG. 2B is a diagram of air interface protocol stack distribution. As shown in FIG. 2B, for both a user plane and a control plane, an air interface protocol stack may be that RLC, MAC, and PHY are on a DU, and PDCP and upper protocol layers are on a CU.

It should be noted that in the architectures shown in FIG. 2A and FIG. 2B, signaling generated by the CU may be sent to a terminal device through the DU, or signaling generated by a terminal device may be sent to the CU through the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling at the RRC layer or the PDCP layer is finally processed as data at a physical layer and sent to the terminal device, or is converted from received data at a physical layer. In this architecture, the signaling at the RRC layer or the PDCP layer may also be considered as being sent by the DU or by the DU and a radio frequency apparatus.

It may be understood that a quantity of network devices and a quantity of terminal devices included in a communication system are not limited in embodiments of this application. In addition to the network device and the terminal device, the foregoing communication system may further include another device or network element like a core network device or a relay device. This is not limited in embodiments of this application.

The communication system shown in FIG. 1 may support various radio access technologies (radio access technologies, RATs). For example, the communication system shown in FIG. 1 may be a fourth generation (4th generation, 4G) communication system (which may also be referred to as a long term evolution (long term evolution, LTE) communication system), a fifth generation (5th generation, 5G) communication system (which may also be referred to as a new radio (new radio, NR) communication system), a wireless fidelity (wireless fidelity, Wi-Fi) system, or a future-oriented evolved system. The communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the communication system evolves and a new service scenario emerges.

The following first describes related technical features in embodiments of this application. It should be noted that these explanations are intended to make embodiments of this application easier to understand, but should not be considered as a limitation on the protection scope claimed in this application.

### (1) Beam quality

A network device sends reference signals in a plurality of beam directions of a cell. The reference signal may be a synchronization signal/physical broadcast channel block (synchronization signal/physical broadcast channel block, SSB), a channel state information reference signal (channel state information reference signal, CSI-RS), or a channel sounding reference signal (sounding reference signal, SRS), or may be another possible reference signal. This is not specifically limited. Correspondingly, a terminal device performs measurement based on a reference signal on a time-frequency resource indicated by the network device. For example, the terminal device may obtain, through sampling, signal strengths that are of a beam and that correspond to a plurality of instant reference signals in a period of time, and weight or combine the plurality of obtained signal strengths, to obtain a measurement result of the beam. The measurement result of the beam may also be referred to as the beam quality (beam quality).

### (2) Radio link quality

For example, the radio link quality of a cell may be obtained based on quality of at least one beam of the cell, and the radio link quality of the cell is not smoothed. For example, a terminal device performs beam-level measurement on the cell to obtain quality of N1 beams of the cell. In this case, the terminal device may use an average value of quality of at least one of the N1 beams as the radio link quality of the cell. Alternatively, the terminal device may use an average value of quality of N2 beams with good measurement results in the N1 beams as the radio link quality of the cell. N1 and N2 are positive integers, and N2 is less than N1.

### (3) Cell quality

For example, the cell quality may be obtained based on quality of at least one beam of a cell, and the cell quality is smoothed. For example, after performing beam-level measurement on the cell to obtain quality of a plurality of beams of the cell, a terminal device may average the quality of the plurality of beams to obtain a current measurement value, and perform weighting (namely, smoothing) on the current measurement value and cell quality obtained last time, to obtain the cell quality. The cell quality may also be referred to as a measurement result of the cell.

It may be understood that both the beam quality and the radio link quality are layer-1/layer-2 measurement results, and the cell quality is a layer-3 measurement result. The layer 1 may be a physical layer, the layer 2 may be a MAC layer, and the layer 3 may be an RRC layer.

In the network architecture shown in FIG. 1, the terminal device may perform handover between different cells of a same network device, or may perform handover between different cells of different network devices. When the terminal device performs handover between different cells of different network devices, a network device before the handover is a source network device, a cell before the handover is a source cell, a network device after the handover is a target network device, and a cell after the handover is a target cell. The following describes a possible cell handover procedure with reference to FIG. 3 by using an example in which a terminal device performs handover between different cells of different network devices.

FIG. 3 is a schematic flowchart of performing cell handover by a terminal device. As shown in FIG. 3, the procedure may include the following steps.

S301: A source network device sends an RRC reconfiguration (RRC reconfiguration) message 1 to the terminal device. Correspondingly, the terminal device receives the RRC reconfiguration message 1.

Herein, the RRC reconfiguration message 1 may include measurement configuration information. The measurement configuration information may include measurement indication information of a source cell (namely, a current serving cell), measurement indication information of a candidate cell, and indication information of a reporting condition of a measurement event. The candidate cell may be a neighboring cell of the source cell. Therefore, the candidate cell may also be referred to as a neighboring cell.

For example, the measurement indication information of the source cell may include a center frequency of the source cell (for example, the source cell is a cell 0). The measurement indication information of the candidate cell may include a center frequency of the candidate cell (for example, the candidate cell includes a cell 1, a cell 2, and a cell 3). The measurement event may include, for example, an event A3 (Event A3), and the event A3 is defined as follows: The neighboring cell (namely, the candidate cell) is better than a serving cell by an offset. The measurement event may further include another possible event. This is not specifically limited.

S302: The terminal device measures the source cell and the candidate cell based on the measurement indication information of the source cell and the measurement indication information of the candidate cell, and sends a measurement report to the source network device after quality of the source cell and quality of the candidate cell meet the reporting condition of the measurement event (for example, the event A3). Correspondingly, the source network device receives the measurement report.

For example, the measurement report may include the quality of the source cell and quality of a plurality of candidate cells.

S303: The source network device determines, based on the measurement report, to trigger the terminal device to perform cell handover, and sends a handover request (handover request) message to a target network device. Correspondingly, the target network device receives the handover request message.

Herein, the source network device may select a target cell from the plurality of candidate cells based on the quality of the plurality of candidate cells, and the target network device is a network device to which the target cell belongs.

S304: After receiving the handover request message, if determining to allow the terminal device to access the target cell, the target network device sends a handover acknowledgment (handover request Acknowledge) message to the source network device. Correspondingly, the source network device receives the handover acknowledgment message.

For example, the target network device may determine, based on a quantity of terminal devices that have been connected to the target cell and the like, whether to allow the terminal device to access the target cell. The handover acknowledgment message may include configuration information of the target cell. The configuration information of the target cell may include an identifier of the target cell (for example, a physical cell identifier (physical cell identifier, PCI) of the target cell) and configuration information required by the terminal device for accessing the target cell, and may further include other possible information. This is not specifically limited.

The configuration information required by the terminal device for accessing the target cell may include an identifier of the terminal device in the target cell, for example, a cell radio network temporary identifier (cell radio network temporary identifier, C-RNTI). Optionally, the configuration information may further include random-access resource information used by the terminal device for accessing the target cell.

S305: The source network device sends an RRC reconfiguration message 2 to the terminal device, where the RRC reconfiguration message 2 includes a handover command, and the handover command indicates to hand over the terminal device from the source cell to the target cell.

For example, the RRC reconfiguration message 2 may further include content included in the handover acknowledgment message. In other words, the source network device may transparently transmit the content included in the handover acknowledgment message to the terminal device.

S306: The terminal device initiates random access to the target cell based on the handover command.

It may be understood that the foregoing uses an example in which the terminal device performs handover between different cells of different network devices. When the terminal device performs handover between different cells of a same network device (that is, the source network device and the target network device are a same network device, and communication between the source network device and the target network device may no longer be performed), processing may be performed with reference to the foregoing procedure.

In the cell handover procedure in FIG. 3, after the terminal device reports the measurement report to the source network device, the source network device selects the target cell from the plurality of candidate cells based on the quality of the plurality of candidate cells, and sends the handover command to the terminal device, to indicate the terminal device to be handed over to the target cell. However, the quality of the plurality of candidate cells based on which the source network device selects the target cell is obtained by the terminal device through measurement before the terminal device reports the measurement report. Therefore, the target cell selected by the source network device may not be a cell that is currently suitable for the terminal device to access, and consequently the handover fails. For example, quality of the cell 1 in the plurality of candidate cells is the highest, and the source network device selects the cell 1 as the target cell. However, the quality of the cell dynamically changes. Because the quality of the plurality of candidate cells is obtained by the terminal device through measurement before the terminal device reports the measurement report, if the quality of the cell 1 significantly degrades after the terminal device reports the measurement report, and the terminal device receives a handover command in this case and performs cell handover to the cell 1 based on the handover command, the handover may fail because the quality of the cell 1 degrades.

Based on this, an embodiment of this application provides a communication method, to improve a success rate of cell handover.

### Embodiment 1

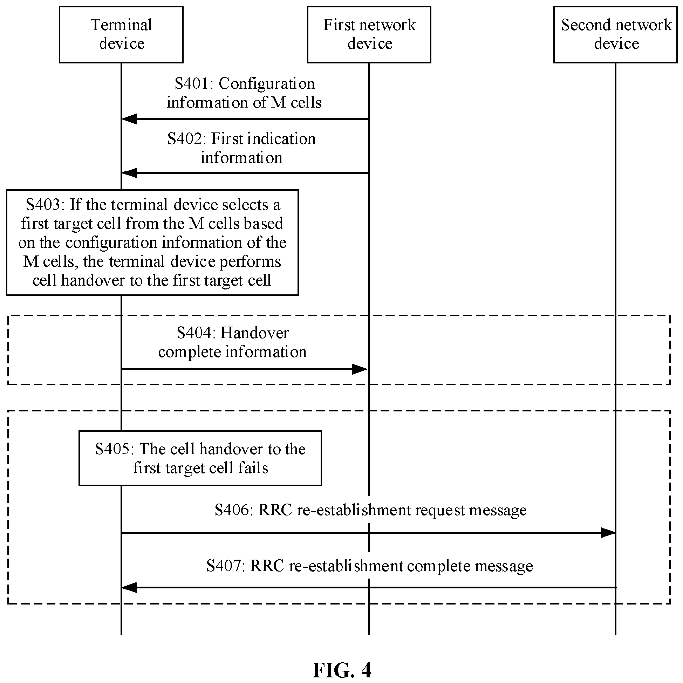

FIG. 4 is a schematic flowchart corresponding to a communication method according to Embodiment 1 of this application. As shown in FIG. 4, the method includes the following steps.

**S401:** A first network device sends configuration information of M cells to a terminal device. Correspondingly, the terminal device receives the configuration information of the M cells.

Herein, there may be one or more cells that provide services to the terminal device (namely, serving cells of the terminal device). For example, there are a plurality of serving cells of the terminal device, and all the plurality of serving cells are cells managed by the first network device. In this case, the plurality of serving cells may include one primary cell and one or more secondary cells.

In an example, the first network device may send a first message to the terminal device in a serving cell (referred to as a serving cell 1) of the terminal device. The first message includes configuration information of the M cells. The first message may be an RRC message, for example, an RRC reconfiguration message. If there are a plurality of serving cells of the terminal device, the serving cell 1 may be a serving cell in the plurality of serving cells. For example, the serving cell 1 may be a primary cell or a secondary cell. It may be understood that the first network device may send the configuration information of the M cells to the terminal device via one message (for example, the first message), or the first network device may send the configuration information of the M cells to the terminal device via a plurality of messages. This is not specifically limited.

The following separately describes the M cells and the configuration information of the M cells.

### (1) M cells

For example, the first message may include configuration information of N cells. When there are a plurality of serving cells of the terminal device, the N cells may include a primary cell and a plurality of neighboring cells of the terminal device. From a perspective of cell handover, the N cells include a current source cell (for example, a source cell for cell handover to a first target cell or a source cell for cell handover to a second target cell in the following) and a plurality of candidate cells of the terminal device. For example, if the current source cell of the terminal device is a primary cell, the plurality of candidate cells are the plurality of neighboring cells. The N cells include the M cells. For example, the M cells may be the plurality of candidate cells. In other words, M is less than N, M is an integer greater than or equal to 2, and N is an integer greater than or equal to 3. Alternatively, the M cells are the N cells. In other words, M=N.

In this embodiment of this application, M=N is used as an example for description. The terminal device may perform cell handover between the M cells. In the following, "selecting a target cell from the M cells" may be understood as selecting the target cell from the plurality of candidate cells included in the M cells. For example, the M cells include a cell 1, a cell 2, a cell 3, ..., and a cell m. When the current source cell of the terminal device is the cell 1, the plurality of candidate cells may include the cell 2, the cell 3, ..., and the cell m. When the current source cell of the terminal device is the cell 2, the plurality of candidate cells may include the cell 1, the cell 3, ..., and the cell m. All the M cells may be cells managed by the first network device, or the M cells belong to the first network device. For example, the M cells may belong to one or more DUs of the first network device.

### (2) Configuration information of the M cells

The following uses one cell (for example, a first candidate cell) in the M cells as an example to describe configuration information of the first candidate cell.

For example, the configuration information of the first candidate cell may include at least one of the following: ① first information, where the first information is used to determine whether to select the first candidate cell as the first target cell; ② configuration information required by the terminal device for accessing the first candidate cell, which may also be referred to as a layer-1/layer-2 mobility configuration (L1/L2 mobility configuration) of the first candidate cell; and ③ related information of the first candidate cell.

### (2.1) First information

For example, the first information may include at least one of the following: a first radio link quality threshold, a first beam quality threshold, and priority information of the first candidate cell. If the first information includes the first radio link quality threshold, when radio link quality of the first candidate cell is greater than or equal to the first radio link quality threshold, the terminal device may select the first candidate cell as the first target cell. If the first information includes the first beam quality threshold, when beam quality of at least one beam of the first candidate cell is greater than or equal to the first beam quality threshold, the terminal device may select the first candidate cell as the first target cell. The priority information of the first candidate cell indicates a priority of the first candidate cell. For example, the priority information of the first candidate cell may include a priority level identifier of the first candidate cell. The priority level is, for example, a high priority, a medium priority, or a low priority.

In a possible implementation, for example, the M cells include the first candidate cell and the second candidate cell. The configuration information of the first candidate cell includes first information 1 corresponding to the first candidate cell, and configuration information of the second candidate cell includes first information 2 corresponding to the second candidate cell. For example, the first information 1 includes a first radio link quality threshold 1 and the priority information of the first candidate cell. When the radio link quality of the first candidate cell is greater than or equal to the first radio link quality threshold 1, the terminal device may select the second candidate cell as the target cell for cell handover. The first information 2 includes a first radio link quality threshold 2 and priority information of the second candidate cell. When radio link quality of the second candidate cell is greater than or equal to the first radio link quality threshold 2, the terminal device may select the second candidate cell as the target cell for cell handover. If the radio link quality of the first candidate cell is greater than or equal to the first radio link quality threshold 1, and the radio link quality of the second candidate cell is greater than or equal to the first radio link quality threshold 2, the terminal device may select, based on the priority of the first candidate cell and a priority of the second candidate cell, a candidate cell with a higher priority as the target cell for cell handover. In this case, different candidate cells in the M cells may correspond to different first radio link quality thresholds. This is not specifically limited.

It may be understood that, in another possible implementation, different candidate cells in the M cells may correspond to a same first radio link quality threshold (or the first beam quality threshold). In this case, the M cells share the same first radio link quality threshold (or the first beam quality threshold).

In addition, if the first information does not include the priority information of the first candidate cell, the terminal device may determine a priority of a candidate cell based on whether configuration information of the candidate cell includes random-access resource information (refer to the following description). For example, if the configuration information of the first candidate cell includes the random-access resource information, and the configuration information of the second candidate cell does not include the random-access resource information, the priority of the first candidate cell is higher than that of the second candidate cell. Alternatively, the terminal device may determine the priority of the candidate cell based on whether the candidate cell is a serving cell (for example, a secondary cell) of the terminal device. If the first candidate cell is a secondary cell of the terminal device, and the second candidate cell is not a secondary cell of the terminal device, the priority of the first candidate cell is higher than that of the second candidate cell.

### (2.2) Configuration information required by the terminal device for accessing the first candidate cell

The configuration information required by the terminal device for accessing the first candidate cell may include an identifier of the terminal device in the first candidate cell, for example, a cell radio network temporary identifier (cell radio network temporary identifier, C-RNTI). Optionally, the configuration information may further include random-access resource information used by the terminal device to initiate random access to the first candidate cell. The random-access resource information may include a random-access preamble and/or a time-frequency resource used to carry the random-access preamble. In addition, the configuration information required by the terminal device for accessing the first candidate cell may further include other possible information, for example, physical layer channel configuration information of the terminal device in the first candidate cell. This is not specifically limited. Physical layer channels include, for example, a physical downlink control channel (physical downlink control channel, PDCCH), a physical downlink data channel (physical downlink shared channel, PDSCH), a physical uplink control channel (physical uplink control channel, PUCCH), and a physical uplink data channel (physical uplink shared channel, PUSCH).

### (2.3) Related information of the first candidate cell

The related information of the first candidate cell may include at least one of the following: a physical cell identifier (physical cell identifier, PCI) of the first candidate cell and measurement configuration information of at least one beam of the first candidate cell. The measurement configuration information of the at least one beam of the first candidate cell is used by the terminal device to measure beam quality of the at least one beam. For example, the measurement configuration information of the at least one beam may include time-frequency resource information of at least one reference signal, and the at least one reference signal is in a one-to-one correspondence with the at least one beam. Optionally, the related information of the first candidate cell may further include other possible information.

It may be understood that the configuration information of the first candidate cell may further include other possible information. This is not specifically limited. In addition, for configuration information of another cell other than the first candidate cell in the M cells, refer to the configuration information of the first candidate cell. Details are not described again.

**S402:** The first network device sends first indication information to a terminal device, where the first indication information indicates the terminal device to select the first target cell. Correspondingly, the terminal device receives the first indication information.

Herein, the first indication information does not include the identifier of the first target cell. In other words, the first network device indicates, via the first indication information, the terminal device to select the first target cell, and the terminal device may determine which cell is specifically selected as the first target cell. It may be understood that, that the first indication information indicates the terminal device to select the first target cell may also be understood as follows: The first indication information indicates the terminal device to perform cell handover, and the first indication information does not include a target cell for the cell handover.

The first network device may send the first indication information to the terminal device in a plurality of manners. For example, the first network device sends a layer-1/layer-2 message to the terminal device, and the layer-1/layer-2 message includes the first indication information. In an example, the first indication information may be a PDCCH order (order). In this way, because the first network device sends the first indication information via the layer-1/layer-2 message, compared with that in FIG. 3 in which the network device sends the handover command via a layer-3 message, this can effectively reduce a handover delay.

For example, there may be a plurality of cases in which the first network device is triggered to send the first indication information to the terminal device. For example, before S402, the terminal device may send third indication information to the first network device. The third indication information indicates that radio link quality of a third cell is less than or equal to a second radio link quality threshold and/or beam quality of at least one beam of the third cell is less than or equal to a second beam quality threshold. Correspondingly, after receiving the third indication information, the first network device may send the first indication information to the terminal device. The third cell is a source cell for cell handover performed by the terminal device in S403. In a possible implementation, the terminal device may send the third indication information to the first network device in the third cell, and/or the first network device may send the first indication information to the terminal device in the third cell.

The terminal device may send the third indication information to the first network device in a plurality of manners. For example, the terminal device may send a layer-1/layer-2 message to the first network device. The layer-1/layer-2 message includes the third indication information. In this way, because the terminal device sends the third indication information via the layer-1/layer-2 message, compared with that in FIG. 3 in which the terminal device reports the measurement report via a layer-3 message, this can effectively reduce a handover delay.

**S403:** If the terminal device selects the first target cell from the M cells based on the configuration information of the M cells, the terminal device performs cell handover to the first target cell.

For example, the terminal device may attempt to select the first target cell from the M cells based on the first information included in the configuration information of the M cells. For details, refer to the foregoing descriptions about the first information. If the terminal device selects the first target cell from the M cells, the terminal device may initiate random access to the first target cell based on configuration information required by the terminal device for accessing the first target cell (for example, an identifier of the terminal device in the first target cell and random-access resource information), to access or hand over to the first target cell.

The random access initiated by the terminal device to the first target cell (the first target cell is used as an example herein, and the second target cell in the following may be processed with reference to the first target cell) may be four-step random access or two-step random access. The four-step random access is used as an example. A message 3 of the four-step random access may include the identifier of the terminal device in the first target cell.

Optionally, the method further includes **S404,** or the method further includes **S405 to S407.**

**S404:** The terminal device is successfully handed over to the first target cell, and sends handover complete information to the first network device in the first target cell, where the handover complete information indicates that the terminal device is successfully handed over to the first target cell.

**S405:** The terminal device determines that the cell handover to the first target cell fails.

For example, there may be a plurality of cases in which the terminal device determines that the cell handover to the first target cell fails. The following describes several possible cases with reference to Case 1 to Case 4.

### (1) Case 1

When a first timer expires, the terminal device determines that the cell handover to the first target cell fails. The first timer is started or restarted when the first message is received. For example, after receiving the first message, the terminal device may start or restart the first timer. Start time of the first timer may be the same as receiving time of the first message, or a time interval between start time of the first timer and receiving time of the first message is a preset time interval.

During running of the first timer, if the terminal device selects the first target cell after receiving the first indication information and is performing (or is about to perform or is ready to perform) cell handover to the first target cell, and the first timer expires, the terminal device may determine that the cell handover to the first target cell fails, and stop performing the cell handover to the first target cell. Alternatively, during running of the first timer, if the terminal device fails to select the first target cell after receiving the first indication information, and the first timer expires, the terminal device may determine that the cell handover to the first target cell fails, and stop performing the cell handover to the first target cell.

Optionally, during running of the first timer, before the terminal device receives the first indication information, the terminal device may successfully perform one or more times of handover. For example, before the terminal device receives the first indication information, the terminal device may receive second indication information from the first network device. The second indication information indicates the terminal device to select the second target cell. In this way, the terminal device may select the second target cell from the M cells based on the configuration information of the M cells and perform cell handover to the second target cell, and the handover succeeds.

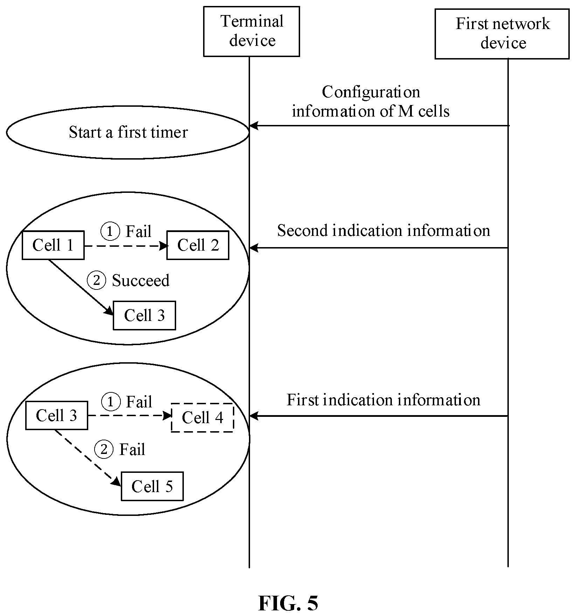

The following uses an example for description with reference to FIG. 5. It is assumed that a first network device sends configuration information of M cells to a terminal device in a cell 1, and the M cells include the cell 1, a cell 2, ..., and a cell m. Refer to FIG. 5, after receiving a first message in the cell 1, the terminal device starts a first timer. During running of the first timer, the terminal device receives, in the cell 1, second indication information from the first network device, and attempts to select a second target cell from the M cells, to perform cell handover to the second target cell. A source cell for the cell handover (namely, a current source cell of the terminal device) is the cell 1. For an implementation in which the terminal device determines whether to select a candidate cell as the second target cell, refer to the foregoing descriptions.

Specifically, for example, the M cells are applicable to a same first radio link quality threshold (or a first beam quality threshold). If radio link quality of the cell 2 in the M cells is greater than or equal to the first radio link quality threshold, and radio link quality of all other candidate cells is less than the first radio link quality threshold, the terminal device may select the cell 2 as the second target cell. After selecting the cell 2, the terminal device may initiate random access to the cell 2 for handover from the cell 1 to the cell 2. If the terminal device fails to perform random access to the cell 2, the terminal device may attempt to select the second target cell from the M cells again. For example, the terminal device selects the cell 3, and initiates random access to the cell 3 for handover from the cell 1 to the cell 3. If the terminal device successfully performs random access to the cell 3, the terminal device is successfully handed over from the cell 1 to the cell 3.

Further, the terminal device receives the first indication information from the first network device, and attempts to select a first target cell from the M cells, to perform cell handover to the first target cell. A source cell for the cell handover (namely, a current source cell of the terminal device) is the cell 3. For example, the terminal device selects the cell 4 as a target cell. If the terminal device fails to perform random access to the cell 4, the terminal device may attempt to select one target cell from the M cells again. For example, the terminal device selects the cell 5 as a target cell. If the terminal device fails to perform random access to the cell 5, the terminal device may attempt to select a target cell from the M cells again. By analogy, when the first timer expires, the terminal device may determine that the cell handover to the first target cell fails, and stop performing the cell handover to the first target cell.

In the Case 1, duration of the first timer may be configured by the first network device for the terminal device. For example, the first message includes the duration of the first timer. It can be learned from the foregoing descriptions that, during running of the first timer, the terminal device may successfully perform one or more times of cell handover. Therefore, optionally, when the first network device includes a CU and one or more DUs, the duration of the first timer may be determined by a CU. Alternatively, the duration of the first timer may be predefined in a protocol. This is not limited in embodiments of this application.

### (2) Case 2

When a first timer expires, the terminal device determines that the cell handover to the first target cell fails. The first timer is started or restarted when the first indication information is received. For example, after receiving the first indication information, the terminal device may start or restart the first timer. Start time of the first timer may be the same as receiving time of the first indication information, or a time interval between start time of the first timer and receiving time of the first indication information is a preset time interval.

During running of the first timer, the terminal device receives the first indication information from the first network device, and attempts to select a first target cell from the M cells. It is assumed that the M cells include a cell 1, a cell 2, ..., and a cell m, and a current source cell of the terminal device is the cell 3. For example, the terminal device selects the cell 1 as a target cell, and initiates random access to the cell 1. If the terminal device fails to perform random access to the cell 1, the terminal device may attempt to select a target cell from the M cells again. By analogy, when the first timer expires, the terminal device may determine that the cell handover to the first target cell fails, and stop performing the cell handover to the first target cell.

In the Case 2, duration of the first timer may be configured by the first network device for the terminal device. It can be learned from the foregoing descriptions that the terminal device starts or restarts the first timer after receiving the first indication information. During running of the first timer, the terminal device can successfully perform only one time of cell handover (namely, handover from the current source cell to the target cell). Therefore, the duration of the first timer may have a correspondence with the current source cell. For example, configuration information of each cell in the M cells may include the duration of the first timer, and the duration of the first timer corresponding to different cells in the M cells may be the same or different. In this case, optionally, when the first network device includes a CU and one or more DUs, the duration of the first timer may be determined by a DU. In addition, when the duration of the first timer corresponding to different cells in the M cells is the same, the M cells may alternatively share the duration of the same first timer. Alternatively, the duration of the first timer may be predefined in a protocol. This is not limited in embodiments of this application.

### (3) Case 3

When a second timer expires, if the terminal device fails to select the first target cell from the M cells based on the configuration information of the M cells, the terminal device determines that the cell handover to the first target cell fails. The second timer is started or restarted when the first indication information is received. For example, after receiving the first indication information, the terminal device may start or restart the second timer. Start time of the second timer may be the same as receiving time of the first indication information, or a time interval between start time of the second timer and receiving time of the first indication information is a preset time interval.

During running of the second timer, the terminal device always fails to select the target cell. For example, during running of the second timer, if radio link quality of a plurality of candidate cells included in the M cells is always less than the first radio link quality threshold, the terminal device may determine that the cell handover to the first target cell fails, and stop performing the cell handover to the first target cell.

In the case 3, duration of the second timer may be configured by the first network device for the terminal device, or the duration of the second timer may be predefined in a protocol. For details, refer to the description of the duration of the first timer in the foregoing Case 2.

### (4) Case 4

When the terminal device performs cell handover, if a quantity of consecutive handover failures is greater than or equal to a quantity threshold, it is determined that the cell handover to the first target cell fails.

In a possible implementation, after receiving the first indication information, the terminal device may start a counter. An initial value of the counter is 0. The terminal attempts to select the first target cell from the M cells. It is assumed that the M cells include a cell 1, a cell 2, a cell 3, ..., and a cell m, and a current source cell of the terminal device is the cell 3. For example, if the terminal device selects the cell 1 as the first target cell, the terminal device may initiate random access to the cell 1. If the terminal device successfully performs random access to the cell 1, the terminal device is successfully handed over from the cell 3 to the cell 1 and turns off the counter. If the terminal device fails to perform random access to the cell 1, the terminal device increases a value of the counter by 1, and attempts to select the first target cell from the M cells again. If the terminal device selects the cell 2 as the first target cell, the terminal device may initiate random access to the cell 2. If the terminal device fails to perform random access to the cell 2, the terminal device increases the value of the counter by 1, and attempts to select the first target cell from the M cells again. By analogy, if the value of the counter is greater than or equal to the quantity threshold, the terminal device may determine that the cell handover to the first target cell fails, and stop performing the cell handover to the first target cell.

In the Case 4, the quantity threshold may be configured by the first network device for the terminal device. For example, the first message may include the quantity threshold. Alternatively, the quantity threshold may be predefined in a protocol. This is not limited in embodiments of this application.

**S406:** The terminal device sends an RRC re-establishment request message to a second network device in a second cell.

For example, after determining that the cell handover to the first target cell fails, the terminal device may perform a cell selection process, to select, by performing the cell selection process, a cell (for example, the second cell) that meets a cell selection criterion, and then initiate an RRC connection re-establishment process in the second cell. For example, the terminal device sends the RRC re-establishment request message to the second network device in the second cell in a random-access process. For a specific implementation of the cell selection process, refer to the conventional technology.

**S407:** After receiving the RRC re-establishment request message, the second network device sends an RRC re-establishment complete message to the terminal device in the second cell.

For example, the RRC re-establishment request message may include an identifier of the first cell and an identifier of the terminal device in the first cell. For example, if there is one serving cell of the terminal device, the first cell may be the serving cell of the terminal device, namely, a cell in which the terminal device receives the first message. For another example, if there are a plurality of serving cells of the terminal device, the first cell may be a primary cell of the terminal device. In this case, if a cell in which the terminal device receives the first message is the primary cell, the first cell is the cell in which the terminal device receives the first message. If a cell in which the terminal device receives the first message is a secondary cell, the first cell is a primary cell corresponding to the secondary cell. For another example, the first cell is the source cell for the cell handover to the first target cell. For example, the first cell may be the cell 3 in the foregoing Case 1.

Specifically, after the first cell becomes a serving cell of the terminal device, the first network device may establish an association relationship between the identifier (for example, a C-RNTI 1) of the terminal device in the first cell and a context of the terminal device. Because the RRC re-establishment request message includes the C-RNTI 1, after receiving the RRC re-establishment request message, the second network device may send a request message to the first network device. The request information includes the C-RNTI 1, and the request message is used to request to obtain context information of the terminal device. Further, after receiving the request message, the first network device may obtain the context information of the terminal device through query based on the C-RNTI 1, and send the context information of the terminal device to the second network device. After receiving the context information of the terminal device, the second network device may send the RRC re-establishment complete message to the terminal device in the second cell.

Optionally, an example in which the RRC re-establishment request message includes the C-RNTI 1 is used. The RRC re-establishment request message may further include a PCI of the first cell and integrity message authentication code (integrity message authentication code, MAC-I). The MAC-I is obtained through calculation based on the PCI of the first cell and the C-RNTI 1, and the MAC-I is used to verify an identity of the terminal device. Correspondingly, after receiving the RRC re-establishment message, the second network device may obtain MAC-I' through calculation based on the PCI of the first cell and the C-RNTI 1. If the MAC-I' is consistent with the MAC-I, the second network device may determine that the identity of the terminal device is valid, and send the RRC re-establishment complete message to the terminal device in the second cell after obtaining the context information of the terminal device.

Optionally, the RRC re-establishment request message may further include a cause value for a cell handover failure. The cause value indicates that a target cell for the cell handover fails to be selected, for example, as in the foregoing Case 3. Alternatively, the cause value indicates that after the target cell for the cell handover is selected, the target cell cannot be accessed, for example, as in the foregoing Case 1 or Case 2. In this way, the second network device may learn, based on the cause value carried in the RRC re-establishment request message, a reason why the terminal device initiates RRC re-establishment.

In the foregoing method, the first network device may first send, in the first cell, the configuration information of the M cells managed by the first network device to the terminal device. When determining to trigger the terminal device to perform cell handover, the first network device sends the first indication information to the terminal device. For example, the first indication information is carried in a layer-1/layer-2 message. After receiving the first indication information, the terminal device may select the first target cell from the M cells based on the configuration information of the M cells, and perform cell handover to the first target cell. The cell handover implemented according to this method may be referred to as layer-1/layer-2 handover.

In this way, in one aspect, the first indication information sent by the first network device may not need to carry the identifier of the first target cell, but the terminal device selects the first target cell. For example, the terminal device may select the first target cell based on a current layer-1/layer-2 measurement result of a candidate cell. Compared with a manner of selecting the target cell by the network device based on a layer-3 measurement result reported by the terminal device in FIG. 3, this facilitates selection of a proper first target cell, thereby improving a success rate of cell handover. In another aspect, because the first network device does not need to select the first target cell, the terminal device may not need to report measurement results of all the candidate cells to the first network device. This saves transmission resources.

In addition, because the first network device does not indicate the first target cell (that is, the first network device does not limit which cell is the first target cell), after selecting the target cell, the terminal device may reselect a target cell for handover if the handover fails. Therefore, an implementation is flexible, and the terminal device is handed over to a proper cell.

In the foregoing Embodiment 1, the first network device is used as a whole, and an implementation procedure of an embodiment of this application is described from a perspective of communication between the first network device and the terminal device. In an example, the first network device may include a CU and one or more DUs. With reference to Embodiment 2, the following describes an implementation procedure of an embodiment of this application from a perspective of communication between the CU and DU and the terminal device.

### Embodiment 2

In Embodiment 2, a procedure of interaction between the CU and DU and the terminal device is described according to Embodiment 1. The first network device includes the CU and a first DU. The first DU manages a first cell. Optionally, the first network device may further include a second DU. The M cells may include M1 cells that belong to the first DU and/or M2 cells that belong to the second DU. M1 and M2 are both positive integers, M1 is less than or equal to M, and M2 is less than or equal to M. For example, M=M1+M2. In addition, the foregoing Embodiment 1 is still used. In Embodiment 2, the M cells may include a cell 1, a cell 2, a cell 3, ..., and a cell m.

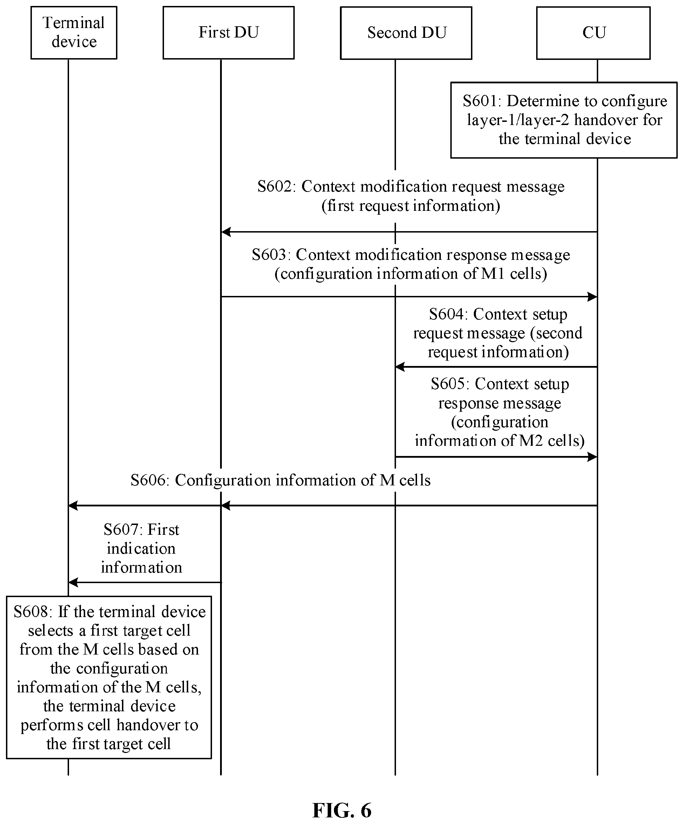

FIG. 6 is a schematic flowchart corresponding to a communication method according to Embodiment 2 of this application. As shown in FIG. 6, the method includes the following steps.

S601: The CU determines to configure layer-1/layer-2 handover for the terminal device.

Herein, there may be a plurality of cases in which the CU determines to configure layer-1/layer-2 handover for the terminal device. For example, after the CU determines that the cell 1 managed by the first DU becomes a serving cell of the terminal device, if a service of the terminal device has a high requirement on a delay, the CU may determine to configure layer-1/layer-2 handover for the terminal device, to reduce a handover delay and meet the service requirement of the terminal device.

S602: The CU sends first request information to the first DU, where the first request information is used to request configuration information of the M1 cells. Correspondingly, the first DU receives the first request information. The M1 cells may include the cell 1.

S603: After receiving the first request information, the first DU may send the configuration information of the M1 cells to the CU.

For example, the CU may send a context modification request message of the terminal device (a UE context modification request) to the first DU. The context modification request message includes the first request information, and the first request information indicates that a purpose of sending the context modification request message to the first DU by the CU is to request the configuration information of the M1 cells. Correspondingly, the first DU may send a context modification response message of the terminal device (a UE context modification response) to the CU. The context modification response message includes the configuration information of the M1 cells. It may be understood that, because the cell 1 managed by the first DU is the serving cell of the terminal device, that is, the first DU has set up the context information of the terminal device, the CU may request the configuration information of the M1 cells via the context modification request message.

S604: The CU sends second request information to the second DU, where the second request information is used to request configuration information of the M2 cells. Correspondingly, the second DU receives the second request information.

S605: After receiving the second request information, the second DU may send the configuration information of the M2 cells to the CU.

For example, the CU may send a context setup request message of the terminal device (a UE context setup request) to the first DU. The context setup request message of the terminal device includes the second request information, and the second request information indicates that a purpose of sending the context setup request message to the second DU by the CU is to request the configuration information of the M2 cells. Correspondingly, the second DU may send a context setup response message of the terminal device (a UE context setup response) to the CU. The context setup response message includes the configuration information of the M2 cells. It may be understood that the context setup response message of the terminal device may further include other possible information, for example, an F1AP address and an F1-U tunnel address that are allocated by the second DU to the terminal device. The F1AP address is used by the CU to send downlink control signaling of the terminal device to the second DU, and the F1-U tunnel address is used by the CU to send downlink data of the terminal device to the second DU.

S606: The CU sends configuration information of the M cells to the terminal device through the first DU. Correspondingly, the terminal device receives the configuration information of the M cells.

For example, the CU may send a first message (for example, an RRC message) to the first DU. The first message includes the configuration information of the M cells. After receiving the first message, the first DU sends the first message to the terminal device.

S607: The first DU sends first indication information to the terminal device, where the first indication information indicates the terminal device to select a first target cell. Correspondingly, the terminal device receives the first indication information.

Optionally, before the first DU sends the first indication information to the terminal device, the terminal device may send third indication information to the first DU. The third indication information indicates that cell quality of a third cell (for example, the third cell is the cell 1) is less than or equal to a third cell quality threshold and/or beam quality of at least one beam of the third cell is less than or equal to a second beam quality threshold.

S608: If the terminal device selects the first target cell from the M cells based on the configuration information of the M cells, the terminal device performs cell handover to the first target cell.

For a procedure after S608, refer to Embodiment 1. Details are not described again.

For the foregoing Embodiment 1 and Embodiment 2, it may be understood that:
(1) Step numbers in the flowcharts described in Embodiment 1 and Embodiment 2 are merely examples of executing the procedures, and do not constitute a limitation on an execution sequence of the steps. In embodiments of this application, there is no strict execution sequence between steps having no time sequence dependency relationship with each other. Not all the steps shown in the flowcharts are mandatory steps. Some steps may be deleted from the flowcharts according to an actual requirement, or another possible step may be added to the flowcharts according to an actual requirement.
(2) The foregoing focuses on differences between Embodiment 1 and Embodiment 2. For content other than the differences, Embodiment 1 and Embodiment 2 may be mutually referenced. In addition, in a same embodiment, different implementations, different cases, or different examples may also be mutually referenced.

The foregoing mainly describes the solutions provided in embodiments of this application from the perspective of interaction between different devices. It may be understood that, to implement the foregoing functions, the first network device, the second network device, and the terminal device may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first network device, the second network device, and the terminal device may be divided into functional units based on the foregoing method examples. For example, each functional unit may be obtained through division based on a corresponding function, or two or more functions may be integrated into one unit. The integrated unit may be implemented in a form of hardware, or may be implemented in a form of software functional unit.

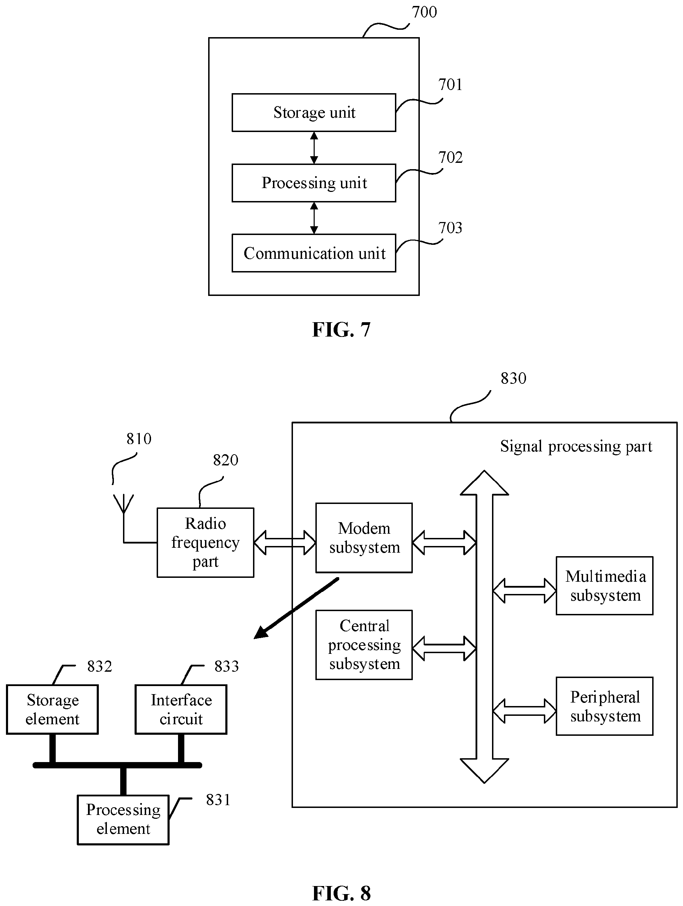

When the integrated unit is used, FIG. 7 is a block diagram of a possible example of an apparatus according to an embodiment of this application. As shown in FIG. 7, the apparatus 700 may include a processing unit 702 and a communication unit 703. The processing unit 702 is configured to control and manage an action of the apparatus 700. The communication unit 703 is configured to support the apparatus 700 in communicating with another device. Optionally, the communication unit 703 is also referred to as a transceiver unit, and may include a receiving unit and/or a sending unit, respectively configured to perform a receiving operation and a sending operation. The apparatus 700 may further include a storage unit 701, configured to store program code and/or data of the apparatus 700.

The apparatus 700 may be the terminal device in the foregoing embodiments. The processing unit 702 may support the apparatus 700 in performing actions of the terminal device in the foregoing method examples. Alternatively, the processing unit 702 mainly performs an internal action of the terminal device in the method examples, and the communication unit 703 may support communication between the apparatus 700 and another device.

For example, in an embodiment, the communication unit 703 is configured to: receive configuration information of M cells from a first network device, where all the M cells are cells managed by the first network device; and receive first indication information from the first network device, where the first indication information indicates the terminal device to select a first target cell. The processing unit 702 is configured to: if the first target cell is selected from the M cells based on the configuration information of the M cells, perform cell handover to the first target cell, where M is an integer greater than or equal to 2.

The apparatus 700 may be the first network device in the foregoing embodiments, and the processing unit 702 may support the apparatus 700 in performing actions of the first network device in the foregoing method examples. Alternatively, the processing unit 702 mainly performs an internal action of the first network device in the foregoing method examples, and the communication unit 703 may support communication between the apparatus 700 and another device.

For example, in an embodiment, the communication unit 703 is configured to: send configuration information of M cells to a terminal device, where all the M cells are cells managed by the first network device; and send first indication information to the terminal device, where the first indication information indicates to select a first target cell and perform cell handover to the first target cell, and the configuration information of the M cells is used to select the first target cell from the M cells.

The apparatus 700 may be the second network device in the foregoing embodiments, and the processing unit 702 may support the apparatus 700 in performing actions of the second network device in the foregoing method examples. Alternatively, the processing unit 702 mainly performs an internal action of the second network device in the foregoing method examples, and the communication unit 703 may support communication between the apparatus 700 and another device.

For example, in an embodiment, the communication unit 703 is configured to receive an RRC re-establishment request message from a terminal device, where the RRC re-establishment request message includes an identifier of a first cell and an identifier of the terminal device in the first cell. The processing unit 702 is configured to obtain context information of the terminal device based on the identifier of the first cell and the identifier of the terminal device in the first cell. The communication unit 703 is further configured to send an RRC re-establishment response message to the terminal device, where the RRC re-establishment response message indicates that RRC re-establishment is completed. The first cell is a cell receiving a first message; or if a cell receiving a first message is a secondary cell, the first cell is a primary cell corresponding to the secondary cell; or the first cell is a source cell for the cell handover.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element or may be implemented in a form in which the processing element invokes software.

In an example, the unit in any one of the foregoing apparatuses may be one or more integrated circuits configured to implement the foregoing methods, for example, one or more application-specific integrated circuits (application-specific integrated circuits, ASICs), or one or more microprocessors (digital signal processors, DSPs), or one or more field programmable gate arrays (field programmable gate arrays, FPGAs), or a combination of at least two of these integrated circuit forms. For another example, when the unit in the apparatus is implemented in a form of scheduling a program by the processing element, the processing element may be a processor, for example, a central processing unit (central processing unit, CPU), or another processor that may invoke the program. For another example, the units may be integrated and implemented in a form of system on a chip (system on a chip, SOC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 8 is a diagram of a structure of a terminal device according to an embodiment of this application. The terminal device may be used in the communication system shown in FIG. 1, to implement operations of the terminal device in the foregoing embodiments. As shown in FIG. 8, the terminal device includes an antenna 810, a radio frequency part 820, and a signal processing part 830. The antenna 810 is connected to the radio frequency part 820. In a downlink direction, the radio frequency part 820 receives, through the antenna 810, information sent by a network device, and sends, to the signal processing part 830, the information sent by the network device for processing. In an uplink direction, the signal processing part 830 processes information from the terminal device, and sends the information to the radio frequency part 820. The radio frequency part 820 processes the information from the terminal device, and then sends processed information to the network device through the antenna 810.

The signal processing part 830 may include a modem subsystem, configured to implement processing of data at each communication protocol layer. The signal processing part 830 may further include a central processing subsystem, configured to implement processing of an operating system and an application layer of the terminal device. In addition, the signal processing part 830 may further include another subsystem, for example, a multimedia subsystem or a peripheral subsystem. The multimedia subsystem is configured to control a camera, screen display, and the like of the terminal device, and the peripheral subsystem is configured to implement a connection to another device. The modem subsystem may be a chip that is separately disposed.

The modem subsystem may include one or more processing elements 831, for example, include a main control CPU and another integrated circuit. In addition, the modem subsystem may further include a storage element 832 and an interface circuit 833. The storage element 832 is configured to store data and a program. However, the program used to perform the methods performed by the terminal device in the foregoing methods may not be stored in the storage element 832, but is stored in a memory outside the modem subsystem, and is loaded and used by the modem subsystem when to be used. The interface circuit 833 is configured to communicate with another subsystem.

The modem subsystem may be implemented by using a chip. The chip includes at least one processing element and an interface circuit. The processing element is configured to perform steps of any method performed by the terminal device. The interface circuit is configured to communicate with another apparatus. In an implementation, units of the terminal device that implement steps of the foregoing methods may be implemented by a program scheduled by a processing element. For example, the apparatus used for the terminal device includes a processing element and a storage element. The processing element invokes a program stored in the storage element, to perform the methods performed by the terminal device in the foregoing method embodiments. The storage element may be a storage element located on a same chip as the processing element, namely, an on-chip storage element.

In another implementation, the program used to perform the methods performed by the terminal device in the foregoing method embodiments may be in a storage element located on a chip different from a chip on which the processing element is located, namely, an off-chip storage element. In this case, the processing element invokes or loads the program from the off-chip storage element to an on-chip storage element, to invoke and perform the methods performed by the terminal device in the foregoing method embodiments.

In still another implementation, units of the terminal device that implement steps of the foregoing methods may be configured as one or more processing elements. These processing elements are disposed in the modem subsystem. The processing element herein may be an integrated circuit, for example, one or more ASICs, one or more DSPs, one or more FPGAs, or a combination of integrated circuits of these types. These integrated circuits may be integrated together to form a chip.

The units of the terminal device that implement the steps of the foregoing methods may be integrated together, and implemented in a form of SOC. The SOC chip is configured to implement the foregoing methods. At least one processing element and a storage element may be integrated into the chip, and the processing element invokes a program stored in the storage element to implement the foregoing methods performed by the terminal device. Alternatively, at least one integrated circuit may be integrated into the chip, to implement the foregoing methods performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps performed by the terminal device, in a first manner, to be specific, by invoking the program stored in the storage element; or may perform some or all steps performed by the terminal device, in a second manner, to be specific, by using a hardware integrated logical circuit in a processor element in combination with instructions; or may certainly perform, by combining the first manner and the second manner, some or all steps performed by the terminal device.

The processing element herein is the same as that described above, and may be implemented by using a processor. A function of the processing element may be the same as a function of the processing unit described in FIG. 7. For example, the processing element may be a general-purpose processor, for example, a CPU, or may be one or more integrated circuits configured to implement the foregoing methods, for example, one or more ASICs, one or more microprocessors DSPs, or one or more FPGAs, or a combination of at least two of the integrated circuit forms. The storage element may be implemented by using a memory, and a function of the storage element may be the same as a function of the storage unit described in FIG. 7. The storage element may be one memory, or an umbrella term of a plurality of memories.

The terminal device shown in FIG. 8 can implement processes related to the terminal device in the foregoing method embodiments. Operations and/or functions of modules in the terminal device shown in FIG. 8 are respectively intended to implement corresponding procedures in the foregoing method embodiments. For details, refer to the descriptions in the foregoing method embodiments. To avoid repetition, detailed descriptions are properly omitted herein.

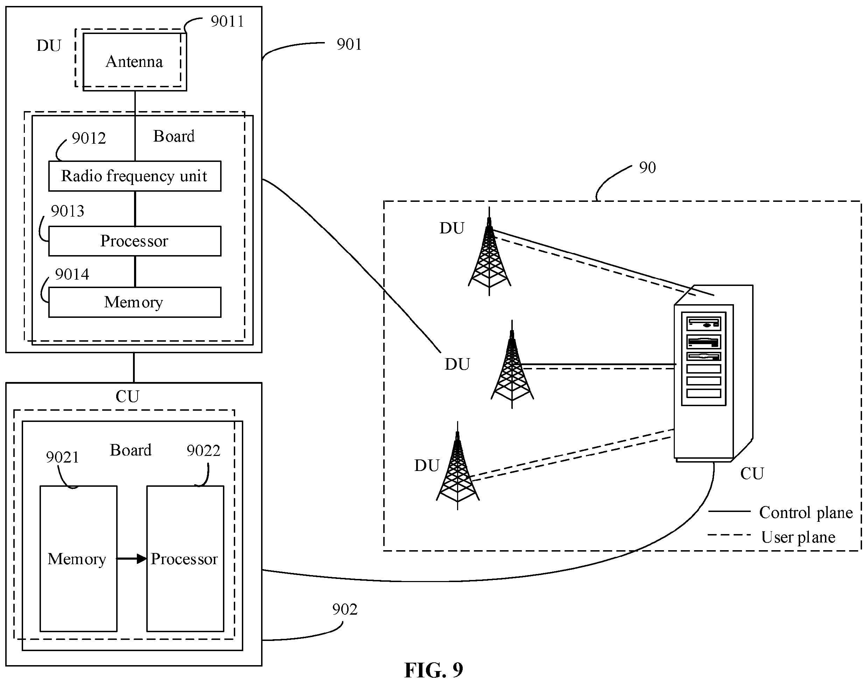

FIG. 9 is a diagram of a structure of a network device according to an embodiment of this application. The network device (or a base station) may be used in the communication system shown in FIG. 1, to perform functions of the network device in the foregoing method embodiments. As shown in FIG. 9, the network device 90 may include one or more DUs 901 and one or more CUs 902. The DU 901 may include at least one antenna 9011, at least one radio frequency unit 9012, at least one processor 9013, and at least one memory 9014. The DU 901 is mainly configured to receive/send a radio frequency signal, perform conversion between the radio frequency signal and a baseband signal, and perform some baseband processing. The CU 902 may include at least one processor 9022 and at least one memory 9021.

The CU 902 is mainly configured to perform baseband processing, control the network device, and the like. The DU 901 and the CU 902 may be physically disposed together, or may be physically separated, namely, a distributed base station. The CU 902 is a control center of the network device, may also be referred to as a processing unit, and is mainly configured to complete a baseband processing function. For example, the CU 902 may be configured to control the network device to perform the operation procedure related to the network device in the foregoing method embodiments.

In addition, optionally, the network device 90 may include one or more radio frequency units, one or more DUs, and one or more CUs. The DU may include at least one processor 9013 and at least one memory 9014, the radio frequency unit may include at least one antenna 9011 and at least one radio frequency unit 9012, and the CU may include at least one processor 9022 and at least one memory 9021.

In an example, the CU 902 may include one or more boards. A plurality of boards may jointly support a radio access network (for example, a 5G network) with a single access indication, or may separately support radio access networks (for example, an LTE network, a 5G network, or another network) with different access standards. The memory 9021 and the processor 9022 may serve one or more boards. In other words, a memory and a processor may be disposed on each board. Alternatively, a plurality of boards may share a same memory and a same processor. In addition, a necessary circuit may further be disposed on each board. The DU 901 may include one or more boards. A plurality of boards may jointly support a radio access network (for example, a 5G network) with a single access indication, or may separately support radio access networks (for example, an LTE network, a 5G network, or another network) with different access standards. The memory 9014 and the processor 9013 may serve one or more boards. In other words, a memory and a processor may be disposed on each board. Alternatively, a plurality of boards may share a same memory and a same processor. In addition, a necessary circuit may further be disposed on each board.

The network device shown in FIG. 9 can implement processes related to the network device in the foregoing method embodiments. Operations and/or functions of modules in the network device shown in FIG. 9 are respectively intended to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a piece of machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations to this application provided that they fall within the scope of protection defined by the following claims and their equivalent technologies.

## Claims

1. A communication method, wherein the method is applied to a terminal device or a module in the terminal device, and the method comprises:
receiving a first message from a first network device, wherein the first message comprises configuration information of M cells, and all the M cells are cells managed by the first network device;
receiving first indication information from the first network device, wherein the first indication information indicates the terminal device to select a first target cell; and
if the first target cell is selected from the M cells based on the configuration information of the M cells, performing cell handover to the first target cell, wherein M is an integer greater than or equal to 2.

2. The method according to claim 1, wherein the method further comprises:
if the cell handover to the first target cell fails, sending a radio resource control RRC re-establishment request message to a second network device in a second cell, wherein the RRC re-establishment request message comprises an identifier of a first cell and an identifier of the terminal device in the first cell; and
the first cell is a cell receiving the first message; or
if a cell receiving the first message is a secondary cell, the first cell is a primary cell corresponding to the secondary cell; or
the first cell is a source cell for the cell handover to the first target cell.

3. The method according to claim 2, wherein that the cell handover to the first target cell fails comprises:
when a first timer expires, the cell handover to the first target cell fails, wherein the first timer is started or restarted when the first message is received or when the first indication information is received.

4. The method according to claim 3, wherein if the first timer is started or restarted when the first message is received, before the receiving first indication information from the first network device, the method further comprises:
receiving second indication information from the first network device, wherein the second indication information indicates the terminal device to select a second target cell; and
if the second target cell is selected from the M cells based on the configuration information of the M cells, performing cell handover to the second target cell, wherein the handover succeeds.

5. The method according to claim 2, wherein that the cell handover to the first target cell fails comprises:
when a second timer expires, if the first target cell fails to be selected from the M cells based on the configuration information of the M cells, the cell handover to the first target cell fails, wherein the second timer is started or restarted when the first indication information is received.

6. The method according to claim 2, wherein that the cell handover to the first target cell fails comprises:
when a quantity of consecutive handover failures is greater than or equal to a quantity threshold, the cell handover to the first target cell fails.

7. The method according to any one of claims 2 to 6, wherein the RRC re-establishment request message further comprises a cause value of the cell handover failure; and
the cause value indicates that a target cell for the cell handover fails to be selected, or the cause value indicates that a target cell for the cell handover cannot be accessed after the target cell is selected.

8. The method according to any one of claims 1 to 7, wherein the M cells comprise a first candidate cell, configuration information of the first candidate cell comprises first information, and the first information is used to determine whether to select the first candidate cell as the first target cell.

9. The method according to claim 8, wherein the first information comprises at least one of the following:
a first radio link quality threshold;
a first beam quality threshold; and
priority information of the first candidate cell.

10. The method according to any one of claims 1 to 9, wherein the method further comprises:
sending third indication information to the first network device, wherein the third indication information indicates that radio link quality of a third cell is less than or equal to a second radio link quality threshold, and/or quality of at least one beam of the third cell is less than or equal to a second beam quality threshold, and the third cell is a source cell for the cell handover; and
the radio link quality of the third cell is obtained based on the quality of the at least one beam.

11. The method according to claim 10, wherein the third cell belongs to the M cells, and configuration information of the third cell comprises measurement configuration information of the at least one beam; and
the method further comprises:
obtaining the quality of the at least one beam through measurement based on the measurement configuration information of the at least one beam.

12. A communication method, wherein the method is applied to a first network device or a module in the first network device, and the method comprises:
sending a first message to a terminal device, wherein the first message comprises configuration information of M cells, all the M cells are cells managed by the first network device, and M is an integer greater than or equal to 2; and
sending first indication information to the terminal device, wherein the first indication information indicates to select a first target cell and perform cell handover to the first target cell, wherein
the configuration information of the M cells is used to select the first target cell from the M cells.

13. The method according to claim 12, wherein the M cells comprise a first candidate cell, configuration information of the first candidate cell comprises first information, and the first information is used to determine whether to select the first candidate cell as the first target cell.

14. The method according to claim 13, wherein the first information comprises at least one of the following:
a first radio link quality threshold;
a first beam quality threshold; and
priority information of the first candidate cell.

15. The method according to any one of claims 12 to 14, wherein the method further comprises:
receiving third indication information from the terminal device, wherein the third indication information indicates that radio link quality of a third cell is less than or equal to a second radio link quality threshold, and/or quality of at least one beam of the third cell is less than or equal to a second beam quality threshold, and the third cell is a source cell for the cell handover; and
the radio link quality of the third cell is obtained based on the quality of the at least one beam.

16. The method according to claim 15, wherein the third cell belongs to the M cells, and the configuration information of the third cell comprises measurement configuration information of the at least one beam.

17. A communication apparatus, comprising a module configured to perform the method according to any one of claims 1 to 11, or a module configured to perform the method according to any one of claims 12 to 16.

18. A communication apparatus, comprising a processor, wherein the processor is coupled to a memory, the memory stores a computer program, and the processor is configured to invoke the computer program in the memory for the communication apparatus to perform the method according to any one of claims 1 to 11 or the method according to any one of claims 12 to 16.

19. A computer-readable storage medium, wherein the storage medium stores a computer program or instructions, and when the computer program or the instructions are executed by a computer, the method according to any one of claims 1 to 11 or the method according to any one of claims 12 to 16 is implemented.

20. A computer program product, wherein when a computer reads and executes the computer program product, the computer is enabled to perform the method according to any one of claims 1 to 11 or the method according to any one of claims 12 to 16.

21. A communication system, wherein the communication system comprises a terminal device and a first network device, the terminal device is configured to perform the method according to any one of claims 1 to 11, and the first network device is configured to perform the method according to any one of claims 12 to 16.
